# EUROPEAN PATENT APPLICATION

(11) **EP 4 187 867 A1**
(43) Date of publication of application: **31.05.2023**
(21) Application number: 22188997.5
(22) Date of filing: 05.08.2022
(51) Int. Cl.: H04L 45/28

(54) **FAST, PREDICTABLE, DYNAMIC ROUTE FAILOVER IN SOFTWARE-DEFINED NETWORKS**

(30) Priority: 24.11.2021 US 202117535181
(71) Applicant: Google LLC, Mountain View, CA 94043 (US)
(72) Inventor: FAHS, Brian Matthew, Mountain View, 94043 (US); PAGANINI, Marco Aurelio, Mountain View, 94043 (US); DOCAUER, James Alexander, Mountain View, 94043 (US); SONDERFELD, Rüdiger, London, SW1W 9TQ (GB); RICHTER, Yossi, Mountain View, 94043 (US); TINNANUR, Vijay, Mountain View, 94043 (US); CANNON, Howard I., Mountain View, 94043 (US); KUMAR, Alok, Mountain View, 94043 (US); ROWLES, Daniel Thomas, London, SW1W 9TQ (GB)
(74) Representative: Betten & Resch

(57) **Abstract**

The disclosed technology consolidates the switch over of dynamic routes to a centralized location, wherein the dynamic routes are tied to the data plane itself. Detection of a health failure within a primary route allows the cloud network and the associated virtual network stack to transfer packet routing to a pre-programmed or configured secondary route.

## Description

### BACKGROUND

Modern cloud environments can contain a very large number of virtual machines (VMs) or virtual private cloud (VPC) networks. A virtual private cloud (VPC) network can be conceptualized as a physical network which is virtualized within a cloud environment. Cloud systems or cloud environments are maintained by a cloud operator or owner. Often, a portion of the cloud environment or the virtual machines belong to different users or user groups. Each virtual machine on the cloud environment can deploy various applications specific to the user or user group to which it belongs. The physical structure on which the cloud environment is executed, which is typically owned by the owner of the cloud provider, may include tens or hundreds of data centers which may be distributed across the globe. A compute engine can be built or instantiated upon a cloud infrastructure, which can allow users to launch or initiate virtual machines on demand. The compute engine can be established as an "infrastructure as a service" on the cloud network. The cloud can also contain a virtual network protocol stack or virtual network stack (either "VNS") to enable operation of the cloud environment. A VNS can include or combine several network functions, including routing, firewall, VPN, load balancing, optimizations, secure socket layers, and so forth.

In current designs, a cloud platform networking plane, which can control aspects of the cloud environment or the compute engine, propagates route updates to other entities using Border Gateway Protocol (BGP). For example, BGP can describe how to send messages between different routers and describe which are reachable and notify peers about a change in the protocol. Routing changes require all endpoints within the cloud network to be updated with the BGP route change. As there can be many components in a data path, a long pipeway for data exists between the components, and significant delays can be brought about in the pipeline. The delay can be on the order of several minutes. On the other hand, service level objectives (SLOs) often aim for total delays of a few seconds with a very high probability. A single large delay can destroy the perceived SLO for a client.

Bidirectional Forwarding Detection (BFD) is a network protocol that is used to detect faults between two routers or switches connected by a link. It provides low-overhead detection of faults even on physical media that doesn't support failure detection of any kind, such as Ethernet, virtual circuits, tunnels and MPLS Label Switched Paths. BFD establishes a session between two endpoints over a particular link. If more than one link exists between two systems, multiple BFD sessions may be established to monitor each one of them. The introduction of BFD as a BGP option makes propagation delays even more evident. Customers that opt for BFD expect, in many cases, sub-second failover propagation. However, BFD depends on the same control plane propagation mechanisms, and thus may suffer from the same limitations imposed by "BGP only" solutions.

Route failures between different dataplanes, layers, clusters, or logical groups within a cloud network can cause an impact on the reliability of interconnectivity between networks. High latency, such as described above, to fail over routes can result in an impact to the reliability of connectivity between networks -- if one of the data paths suffers an outage then the time to reconverge routable paths is the time to mitigate packet loss on that particular pathway.

In such software-defined networks (SDN), configuration changes, such as dynamic routes, are distributed to all endpoints, which may include VMs and other components like Front Ends serving traffic from cloud backends. With such distributed programming, it is impossible to provide bounded time guarantees. User expectation and SLO requirements can require that convergence of the data plane (packet routing) should be at the same time as the control plane, such as when a BGP/BFD session detected down, but that can be impractical in a widely distributed software-defined networking system as is used in cloud environments. Even a single network prefix takes time to get updated.

### SUMMARY

Aspects of the present disclosure provide methods, systems, and apparatuses for increasing reliability and meeting service level objectives within a cloud environment through the use of "route sets." The increased reliability occurs even when using BFD which can be an option within BGP.

In some examples the disclosed technology can include a plurality of customer edges; a network service, the network service connecting cloud computing clusters to at least one customer edge, wherein each cloud computing cluster contains a cloud router and at least one virtual machine instance; an edge router between the customer edge and the network service; a primary route maintained in a data plane task; and a secondary route maintained in a data plane task, the secondary route configured to be automatically used upon detection of an error in the primary route.

An attachment can be a particular virtual connection between a customer's Virtual Private Cloud network and their on-premises network. This virtual connection can be made over a physical interconnect, which can support multiple attachments. A drained attachment can be administratively configured to not have any traffic flowing through it. Each attachment has a corresponding BGP session. A drain can be implemented by shutting down the session, so that there are no routes for data over the attachment.

Aspects of the disclosed technology include a method. The method can be used to provide failover routing in a cloud network. The method can comprise maintaining a primary route and backup route in a cloud network; establishing a primary route from a customer edge to a virtual machine or cloud front end within the cloud network; monitoring the primary route for a failure via a signal from a cloud router to a health check module; providing route health information to the virtual machine or the cloud front end coupled to the health check module; and upon detecting a failure of the primary route, automatically establishing or routing data from the customer edge to the virtual machine or cloud front end within the cloud network. The primary route and the backup route can collectively form a route set. Information related to the route set can be stored in a data plane. The primary route can be deemed to fail upon packets or other network traffic within the network not meeting a service level objective. A service level objective can define a failure condition. The primary route and the secondary route can utilize a Border Gateway Protocol network protocol. The primary route and the secondary route can utilize a Bidirectional Forwarding Detection (BFD) network protocol. A cloud network host can be configured to receive a set of endpoints in a path and a health-checking endpoint.

Aspects of the disclosed technology include a non-transient computer readable medium. The non-transient computer readable medium can contain program instructions, and the instructions when executed can perform the steps of maintaining a primary and backup route in a cloud network; establishing a primary route from a customer edge to a virtual machine or cloud front end within the cloud network; monitoring the primary route for a failure via a signal from a cloud router to a health check module; providing route health information to the virtual machine or the cloud front end coupled to the health check module; and upon detecting a failure with the primary route, automatically establishing or routing data from the customer edge to the virtual machine or cloud front end within the cloud network.

The primary route and the backup route can collectively form a route set. Information related to the route set can be stored in a data plane. The primary route can be deemed to fail upon packets within the network not meeting a service level objective. The service level objective can define a failure condition. The primary route and the secondary route can utilize Bidirectional Forwarding Detection (BFD) network protocols. A cloud network host can be configured to receive a set of endpoints in a path and a health-checking endpoint.

Aspects of the disclosed technology can include a system. The system can include a processor and a non-transient computer readable medium containing instructions, the instructions when executed by the processor configured to: maintaining a primary and backup route in a cloud network; establishing a primary route from a customer edge to a virtual machine or cloud front end within the cloud network; monitoring the primary route for a failure via a signal from a cloud router to a health check module; providing route health information to the virtual machine or the cloud front end coupled to the health check module; and upon detecting a failure with the primary route, automatically establishing or routing data from the customer edge to the virtual machine or cloud front end within the cloud network. The primary route and the backup route can collectively form a route set. Information related to the route set can be stored in a data plane. The primary route can be deemed to fail upon packets or other network traffic within the network not meeting a service level objective. A service level objective can define a failure condition. The primary route and the secondary route can utilize a Border Gateway Protocol network protocol. The primary route and the secondary route can utilize a Bidirectional Forwarding Detection (BFD) network protocol. A cloud network host can be configured to receive a set of endpoints in a path and a health-checking endpoint.

### BRIEF DESCRIPTION OF THE DRAWINGS

The accompanying drawings are not intended to be drawn to scale. Like reference numbers and designations in the various drawings indicate like elements. For purposes of clarity, not every component may be labeled in every drawing. In the drawings:
Figure 1 illustrates a schematic view of a network.
Figure 2 illustrates aspects of an example computing system.
Figure 3 illustrates a redundant dataplane according to aspects of the disclosed technology.
Figure 4 illustrates a flowchart of logical information transferred between logical or software components of a cloud network.
Figure 5 illustrates a redundant dataplane according to aspects of the disclosed technology.
Figure 6 illustrates an example method which can be used for providing failover routing in a cloud network.

### DETAILED DESCRIPTION

### OVERVIEW

In broad overview, the disclosed technology consolidates the failover of dynamic routes to a centralized location, wherein the dynamic routes are tied to the data plane itself. Moving the dynamic routes to the data plane leads to optimizations which converts the intractable problem of ensuring extremely low propagation delays through an entire global control plane and every host within the distributed network into a highly predictable, very low latency propagation unit that is tightly coupled to the success of the data plane itself.

In more detail, the disclosed technology can enable fast route failover by: (1) having data plane components themselves factor BGP/BFD and physical link-health into their own health reporting to the software-defined network; and (2) once a data plane component detects that it is unhealthy, it converts itself into a packet re-circulator to cause packets to be propagated onto another host that can allow the packet to appropriately reach its destination, in addition to alerting operations teams that packets are still being propagated despite the fact that routes should be withdrawn.

There are also additional modifications to the disclosed technology related to interconnects. An interconnect can be a network which can extend an on-premises network to a cloud network environment through various connections, such as direct physical connections or high available low latency connections. For example, a data plane component can be triggered to direct traffic to an unused half of a highly-available pair of interconnects.

As used in this disclosure, a cloud user, cloud consumer, or cloud customer can refer to an individual, organization, or other entity which can purchase, rent, subscribe to, or otherwise utilize cloud resources. A cloud provider can refer to an organization, company, or entity which provides cloud based services to customers, users, or consumers.

### EXAMPLE SYSTEMS AND METHODS

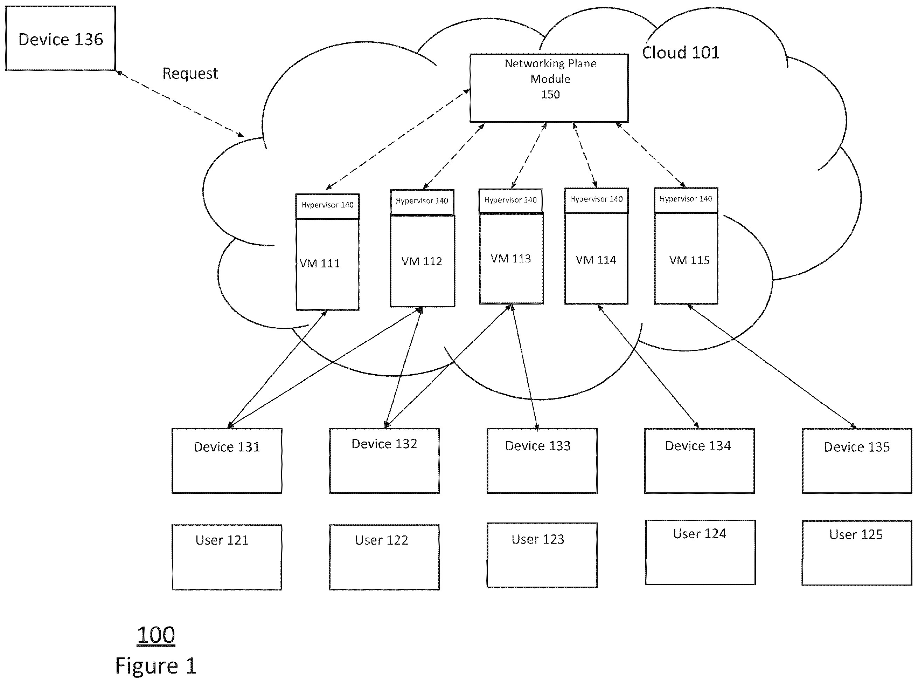

Figure 1 illustrates a schematic view of an example of a network 100 with cloud 101, virtual machines 111-115, and devices 131-135 respectively associated with users 121-125. Cloud 101 can contain hardware which can include, for example, networking equipment, like switches, routers, firewalls, load balancers, storage arrays, backup devices, and servers. Cloud 101 can be thought of as an abstraction which connects servers together, dividing and abstracting resources to make them accessible to users. Cloud 101 can contain a networking plane module 150, a hypervisor 140, and virtual machines 111-115.

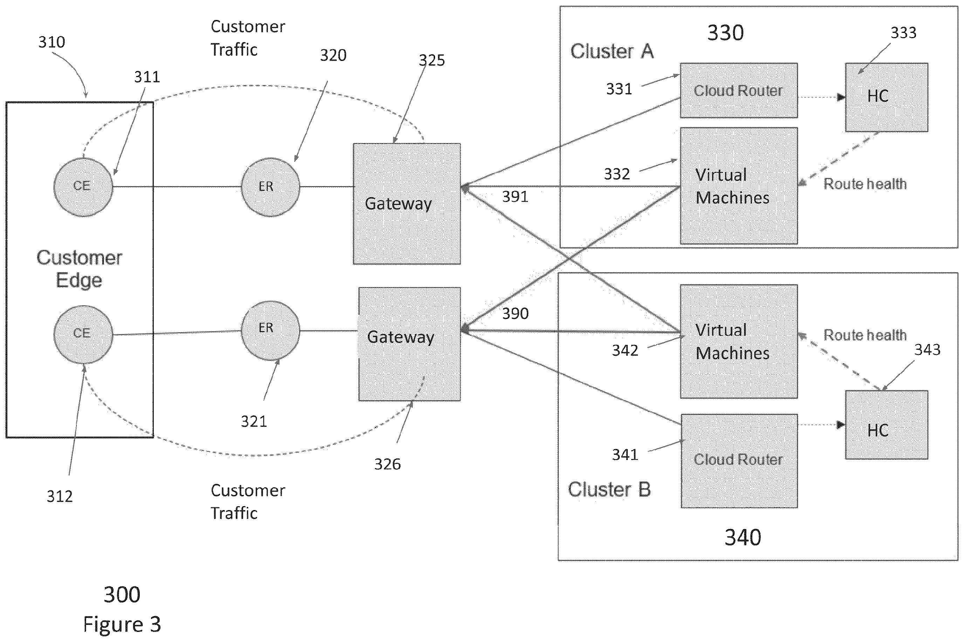

Although cloud 101 is represented as a singular entity, a person of skill in the art should understand that cloud 101 is a conceptualization of distributed hardware and software systems. Cloud 101 can consist of other clouds. In other examples, cloud 101 can be a virtual machine or a virtual cloud which is itself located within another cloud. In some examples, cloud 101 can be distributed or divided across a plurality of physical locations, such as datacenters, which can be interlinked or interconnected. In other examples, portions of cloud 101 can be hosted offsite. For instance, in some examples, computer processing or computational hardware for cloud 101 can be located in one location while storage mediums can be located in other areas. Examples of computational and storage mediums are disclosed herein with reference to Figure 3.

Cloud 101 can also be configured such that aspects of the cloud environment are controlled. For example, cloud 101 can contain software which responds to user demands or requests, such as increasing or decreasing the size of a virtual machine, the amount of resources dedicated to a virtual machine, or the number of virtual machines available to a given user.

Cloud 101 can contain a number of virtual machines 111-115. Generally, a virtual machine is an emulation of a computer system or computer network. Virtual machines are based on computer architectures and can provide the functionality of a physical computer. An implementation may involve specialized hardware, software, or a combination. Each virtual machine 111-119 can be hosted or run on a cloud. In some examples, a virtual machine can be instantiated in response to a user request. In some examples, each virtual machine can be a cluster of virtual machines.

Cloud 101 can also contain a hypervisor 140. A hypervisor is also known as a virtual machine monitor, a VMM, or a virtualizer. A hypervisor is a piece of computer software, firmware, or hardware that can create, run, or monitor virtual machines. In some examples, only certain types of information about the virtual machines in cloud 101 can be accessible to hypervisor 140.

Each virtual machine can be managed by a user 121-125. Each user can access his or her corresponding virtual machine through tools provided by the cloud provider, such as through user devices 131-135. In other examples, specialized software installed on a user device can be used to interact with the cloud or a particular virtual machine. User devices 131-135 can be similar to computing system 310, described below with reference to Figure 3.

User device 136 can be a device which is not controlling or subscribed to the virtual machines of cloud 101, but can access information or resources of the clouds. In some examples, a user device 136 can make a request or attempt to access resources which are hosted on cloud 101. For example, user device 136 may attempt to make a particular request using a web interface which can in turn be routed to a particular virtual machine on cloud 101.

Each virtual machine, or cluster of virtual machines can be running one or more applications, software, operating system, and store data. In addition, requests from users to the cloud, to one or more virtual machines, or between virtual machines can generate network data or traffic.

Cloud 101 can be hosted on a combination of virtual or physical machines by a cloud provider. Each project can be run on a software-defined networking (SDN) stack, which can be a software layer within the "layers" on which the VPC network is run or established. SDN is an approach to network management that enables dynamic and programmatically efficient network configurations in order to improve network performance and monitoring, and thus enabling it to provide efficiencies in cloud computing environments. Elements of cloud 101 can be broken into various logical levels, such as regions, subnets, zones, and VMs.

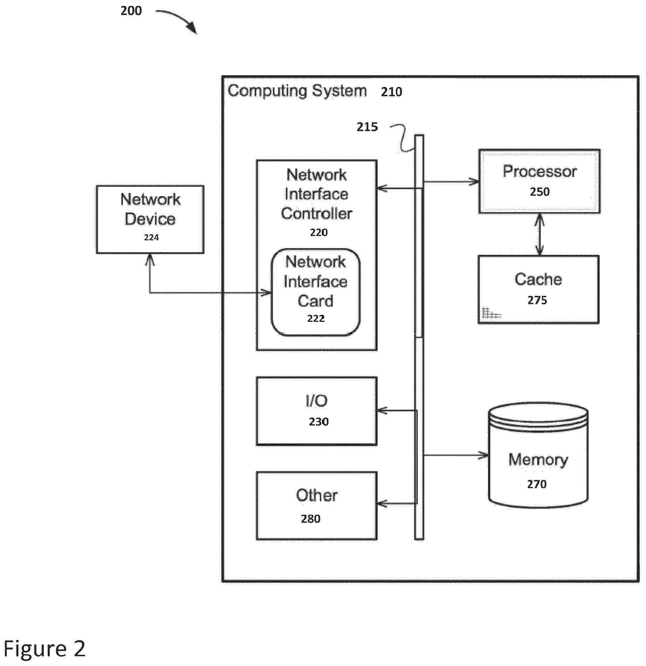

Figure 2 is a block diagram 200 illustrating an example computer system 210 with which aspects of this disclosure, including cloud 101 and networking plane module 150 can be implemented. In certain aspects, the computer system 210 may be implemented using hardware or a combination of software and hardware, either in a dedicated server, or integrated into another entity, or distributed across multiple entities. In some examples, example computing system 210 can be a user computing system or device. In other examples, cloud 101 can consist of one or more example computer systems, similar to computing system 210, coupled or linked via software and hardware components to operate collectively as a cloud.

In broad overview, the computing system 210 includes at least one processor 250 for performing actions in accordance with instructions and one or more memory devices 270 or 275 for storing instructions and data. The illustrated example computing system 210 includes one or more processors 205 in communication, via a bus 215, with at least one network interface driver controller 220 with one or more network interface cards 222 connecting to one or more network devices 224, memory 270, and any other devices 280, e.g., an I/O interface. The network interface card 222 may have one or more network interface driver ports to communicate with the connected devices or components. Generally, a processor 250 executes instructions received from memory. The processor 250 illustrated incorporates, or is directly connected to, cache memory 275.

In more detail, the processor 250 may be any logic circuitry that processes instructions, e.g., instructions fetched from the memory 270 or cache 275. In many embodiments, the processor 250 is a microprocessor unit or special purpose processor. The computing device 210 may be based on any processor, or set of processors, capable of operating as described herein. The processor 250 may be a single core or multi-core processor. The processor 250 may be multiple processors. In some implementations, the processor 250 can be configured to run multi-threaded operations. In some implementations, the processor 250 may host one or more virtual machines or containers, along with a hypervisor or container manager for managing the operation of the virtual machines or containers. In such implementations, modules and components shown and described herein can be implemented within the virtualized or containerized environments provided on the processor 250.

The memory 270 may be any device suitable for storing computer readable data. The memory 270 may be a device with fixed storage or a device for reading removable storage media. Examples include all forms of non-volatile memory, media and memory devices, semiconductor memory devices (e.g., EPROM, EEPROM, SDRAM, and flash memory devices), magnetic disks, magneto optical disks, and optical discs (e.g., CD ROM, DVD-ROM, and Blu-ray^{®} discs). A computing system 210 may have any number of memory devices 270. In some implementations, the memory 270 supports virtualized or containerized memory accessible by virtual machine or container execution environments provided by the computing system 310.

The cache memory 275 is generally a form of computer memory placed in close proximity to the processor 250 for fast read times. In some implementations, the cache memory 275 is part of, or on the same chip as, the processor 250. In some implementations, there are multiple levels of cache 275, e.g., L2 and L3 cache layers.

The network interface driver controller 220 manages data exchanges via the network interface driver 222 (also referred to as network interface driver ports). The network interface driver controller 220 handles the physical and data link layers of the OSI model for network communication. In some implementations, some of the network interface driver controller's tasks are handled by the processor 250. In some implementations, the network interface driver controller 220 is part of the processor 250. In some implementations, a computing system 210 has multiple network interface driver controllers 220. The network interface driver ports configured in the network interface card 222 are connection points for physical network links. In some implementations, the network interface controller 220 supports wireless network connections and an interface port associated with the network interface card 222 is a wireless receiver/transmitter. Generally, a computing device 210 exchanges data with other network devices 224 via physical or wireless links that interface with network interface driver ports configured in the network interface card 222. In some implementations, the network interface controller 220 implements a network protocol such as Ethernet.

The other network devices 224 are connected to the computing device 210 via a network interface driver port included in the network interface card 222. The other network devices 224 may be peer computing devices, network devices, or any other computing device with network functionality. For example, a first network device 224 may be a network device such as a hub, a bridge, a switch, or a router, connecting the computing device 210 to a data network such as the Internet or Cloud 101 shown in Figure 1.

The other devices 280 may include an I/O interface, external serial device ports, and any additional co-processors. For example, a computing system 210 may include an interface (e.g., a universal serial bus (USB) interface) for connecting input devices (e.g., a keyboard, microphone, mouse, or other pointing device), output devices (e.g., video display, speaker, or printer), or additional memory devices (e.g., portable flash drive or external media drive). In some implementations, a computing device 200 includes an additional device 280 such as a coprocessor, e.g., a math co-processor can assist the processor 250 with high precision or complex calculations.

Instructions on computing system 210 may control various components and functions of computing system 210. For example, the instructions may be executed to perform any of the methods indicated in this disclosure. In some examples, algorithms can be included as a subset of or otherwise as part of instructions included on computing system 210. Instructions can include algorithms to execute any of the methods or a subset of the methods described within this disclosure.

User interfaces on the computing system 210 may include a screen which allows a user to interact with computing system 210, such as a touch screen or buttons. A display can also be included such as an LCD, LED, mobile phone display, electronic ink, or other display to display information about computing system 210. The user interface can allow for both input from a user and output to a user. A communication interface(s) can include hardware and software to enable communication of data over standards such as Wi-Fi, Bluetooth, infrared, radio-wave, and/or other analog and digital communication standards. Communication interface(s) allow for computing system 210 to be updated and information generated by computing system 210 to be shared to other devices. In some examples, communication interface(s) can send information stored in memory to another user device for display, storage or further analysis.

Figure 3 illustrates a schematic diagram 300 of an example architecture or use in dataplanes, which can be used for example, to ameliorate failover propagation delays and associated problems. As will be appreciated from the description below, the design of Figure 3 can be operable for any of the existing data planes within a cloud computing environment and is configured to behave in a manner more deterministic rather than random in determining or identifying failovers. In some examples, the diagram of Fig. 3 can be implemented in systems not using or enabling BFD as a BGP option. The information about primary and backup routes, as well as the health checking endpoints can be pre-programmed or configured into a virtual network stack of the cloud environment 101 by a virtual machine controller (VMC). In some examples, the VMC can differ from a hypervisor, and can configure a network stack on a host machine. The VMC can be part of the control plane. The VMC can also configure multiple virtual machines simultaneously or coordinate aspects of operation between multiple virtual machines.

Illustrated in Fig. 3 is a customer edge module 310, containing customer edges 311 and 312, which are linked to gateways 325 and 326, via edge router (ER) 320 and 321, and in turn to clusters 330 and 340, each containing cloud routers 331 and 341, VMs 332 and 342, and health checker (HCs) 333 and 343. Clusters 330 and 340 can contain a variety of resources, such as virtual machines and cloud front ends. Clusters 330 and 340 can exist on the cloud, such as cloud 101, while the customer edge can be instantiated, be accessed, or be present on a user device, such as user devices 131-135. Illustrated by connected lines in Figure 3 are data pathways between various elements of figure 300.

Also illustrated in Fig. 3 are "Route Sets" which can be comprised of a primary route 391 and a secondary route 390. With a Route Set, a cloud network host(s) can be enabled or configured to receive a set of endpoints for each destination, and a health-checking endpoint. The health checking endpoint can be a combination of a task identifier, remote procedure call, service-name, and identification of a particular BFD or BGP session which should be investigated. Failure in the health signal can cause routes to stop sending information to the set of endpoints. In some examples, such as when all endpoints are unhealthy, the system can be configured to nonetheless treat them as healthy to avoid a failure leading to an outage or entire system failure.

HC 333 and 343 can monitor the health of data received from gateways 325 and 326.

VMs 332 and 342 can be configured to interface with HC 333 and HC 343. VMs 332 and 342 can receive route health signals from HCs 333 and 343 respectively. Cloud Routers 331 and 341 enables users to dynamically exchange routes between your Virtual Private Cloud (VPC) and on-premises networks by using Border Gateway Protocol (BGP). Information about primary and backup routes, as well as the health checking endpoints would be pre-programmed into the SDN by SDN Controller.

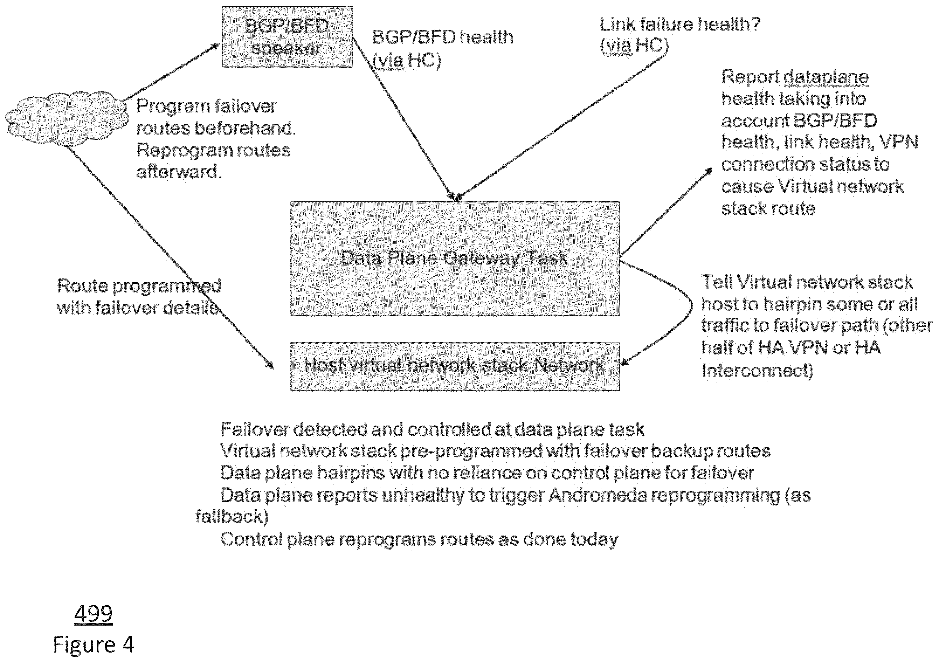

Figure 4 illustrates a flowchart of logical information transferred between logical or software components of a cloud network. Illustrated in 499 is a VRM, VMC, VRC, data plane task, and a host virtual network stack (VNS) network. Various information related to the interoperation, dataflow, and steps related to VRM, VRC, dataplanes, etc. are illustrated with respect to said figure.

The software components and/or modules described above can be capable of performing multiple tasks related to failover protection. HCs can provide BGP/BFP health information to a data plane gateway task or VPN. In some examples, the data plane gateway task and host VNS network can communicate information between one another, such as the data plane gateway task instructing the host VNS network to hairpin a portion or entirety of traffic to a failover path. The data plane gateway task can report the data plane health to cause virtual network stack route reprogramming. The data plane health can take into account BGP/BFD health, link health, and gateway connection status. VRM can communicate with a VMC and the cloud network to program failover routes prior to a failover and reprogram routes after a failover route is used. This information can be passed from a VRM to a VMC, and in turn the VMC can send a route programmed with failover details.

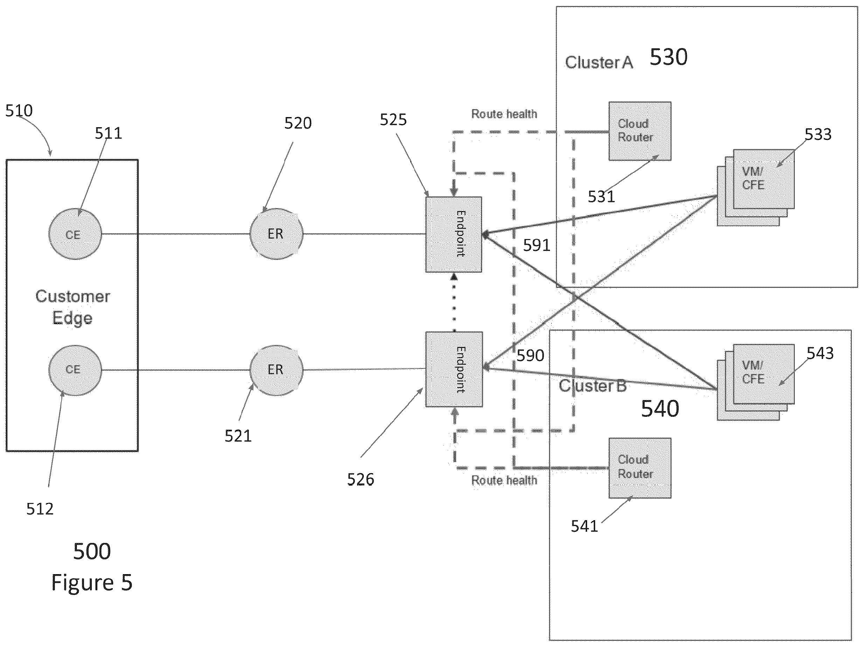

Fig. 5 illustrates a schematic diagram 500 of a design for use in dataplanes. The design illustrated in Figure 5 does not include a HC, such as those illustrated in Figs. 3 and 4. In some examples, the diagram of Fig. 5 can be implemented in systems using or enabling BFD as a BGP option.

Illustrated in Fig. 5 is a customer edge module 510, containing customer edges 511 and 512, which are linked to endpoints 525 and 526, via ERs 520 and 521, and in turn to clusters 530 and 540, each containing cloud routers 531 and 541, and a bundle of virtual machines or other networked resources, bundles 533 and 543 respectively. Endpoint 525 and 526 can be connected to bundles 533 and 543 via routes 591 and 592. Clusters 530 and 540 can contain a variety of resources, such as virtual machines and cloud front ends. Clusters 530 and 540 can exist on the cloud, such as cloud 101, while the customer edge can be instantiated, be accessed, or be present on a user device, such as user devices 131-135. Also illustrated in Fig. 5 are "route sets" which can be comprised of a primary route 591 and a secondary route 590. Illustrated by connected lines in Figure 5 are data pathways between various elements of figure 500.

In the design illustrated in Fig. 5, components, such as an Host Virtual Network Stack (VNS), or the entirety of endpoints 525 and 526 can be configured as forwarders, which in turn can be utilized when a failure is detected by the BGP/BFD speaker, such as Cloud Router 531 or 541. This can in turn trigger packets to be forwarded across the secondary route 590 rather than primary route 591. The health of any particular route can be provided to the cloud router through the endpoints 525 and 526 as illustrated via the dashed lines in Fig. 5.

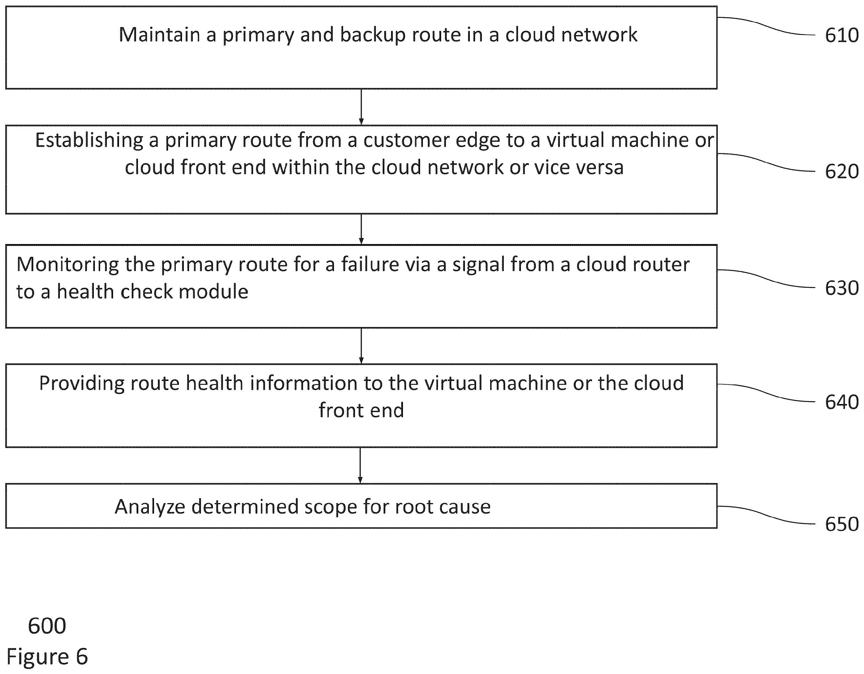

Figure 6 illustrates a flow chart of an example method 600. Method 600 can be used to perform fast failover for cloud routers.

At block 610, a primary route and backup route can be maintained in a cloud network. In some examples, the primary route and the secondary route can collectively form a route set. The information related to the route set can be stored in a data plane. In other examples, information related to the primary route and the secondary route can be stored on physical hosts related to the virtual network, in a control plane, or in a virtual network stack. The secondary route can be preprogrammed or predetermined so as to provide a fast failover mechanism without requiring the secondary route to be searched, discovered, or established after the primary route fails.

At block 620, a primary route from a customer edge to a virtual machine or cloud front end within the cloud network can be established. The establishment of the route can occur through one or more network components. In some examples, a data plane can establish a connection between a resource within a cluster of a cloud network, such as a virtual machine or cloud front end, a virtual private network, and a customer edge. In some examples, the primary route or other route can be established in the reverse direction, e.g., from a virtual machine to a customer edge.

At block 630, the primary route for a failure via a signal from a cloud router to a health check module can be monitored. In some examples, a signal can be generated or inferred from certain network traffic not existing or being communicated between endpoints of a route. In some examples, the primary route is deemed to fail upon packets within the network not meeting a service level objective. The signal can be the BGP or BFD session state, or another BGP or BFD related parameter.

At block 640, route health information to the virtual machine or the cloud front end coupled to the health check module can be provided. In some examples, a cloud network host can be configured to receive a set of endpoints in a path and a health-checking endpoint to evaluate or process the route health information.

At block 650, data from the customer edge to the virtual machine or cloud front end within the cloud network can be automatically established or routed upon detecting a failure with the primary route. In some examples, only a partial amount of data being transferred can be transferred to a secondary route.

While this disclosure contains many specific implementation details, these should not be construed as limitations on the scope of what may be claimed, but rather as descriptions of features specific to particular implementations. Certain features that are described in this specification in the context of separate implementations may also be implemented in combination in a single implementation. Conversely, various features that are described in the context of a single implementation may also be implemented in multiple implementations separately or in any suitable sub-combination. Moreover, although features may be described above as acting in certain combinations and even initially claimed as such, one or more features from a claimed combination may in some cases be excised from the combination, and the claimed combination may be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous.

References to "or" may be construed as inclusive so that any terms described using "or" may indicate any of a single, more than one, and all of the described terms. The labels "first," "second," "third," and so forth are not necessarily meant to indicate an ordering and are generally used merely to distinguish between like or similar items or elements.

Various modifications to the implementations described in this disclosure may be readily apparent to those skilled in the art, and the generic principles defined herein may be applied to other implementations without departing from the spirit or scope of this disclosure. Thus, the claims are not intended to be limited to the implementations shown herein, but are to be accorded the widest scope consistent with this disclosure, the principles and the novel features disclosed herein.

## Claims

1. A method of providing failover routing in a cloud network, the method comprising:
maintaining a primary route and backup route in a cloud network;
establishing a primary route from a customer edge to a virtual machine or cloud front end within the cloud network;
monitoring the primary route for a failure via a signal from a cloud router to a health check module;
providing route health information to the virtual machine or the cloud front end coupled to the health check module; and
upon detecting a failure of the primary route, automatically establishing or routing data from the customer edge to the virtual machine or cloud front end within the cloud network.

2. The method of claim 1 wherein:
the primary route and the backup route collectively form a route set; or
the primary route and the backup route collectively form a route set and information related to the route set is stored in a data plane.

3. The method of claim 1 wherein:
the primary route is deemed to fail upon packets within the network not meeting a service level objective; or
the primary route is deemed to fail upon packets within the network not meeting a service level objective and a service level objective defines a failure condition.

4. The method of claim 1 wherein the primary route and the secondary route utilize a Border Gateway Protocol network protocol.

5. The method of claim 4 wherein the primary route and the secondary route utilize a Bidirectional Forwarding Detection, BFD, network protocol.

6. The method of claim 1 wherein a cloud network host is configured to receive a set of endpoints in a path and a health-checking endpoint.

7. A computer readable medium containing instructions, which, when executed by at least one computer, cause the at least one computer to perform the steps of:
maintaining a primary and backup route in a cloud network;
establishing a primary route from a customer edge to a virtual machine or cloud front end within the cloud network;
monitoring the primary route for a failure via a signal from a cloud router to a health check module;
providing route health information to the virtual machine or the cloud front end coupled to the health check module; and
upon detecting a failure with the primary route, automatically establishing or routing data from the customer edge to the virtual machine or cloud front end within the cloud network.

8. The medium of claim 7 wherein:
the primary route and the backup route collectively form a route set; or
the primary route and the backup route collectively form a route set and information related to the route set is stored in a data plane.

9. The medium of claim 7 wherein:
the primary route is deemed to fail upon packets within the network not meeting a service level objective; or
the primary route is deemed to fail upon packets within the network not meeting a service level objective and the service level objective defines a failure condition.

10. The medium of claim 7 wherein the primary route and the secondary route utilize Bidirectional Forwarding Detection, BFD, network protocols.

11. The medium of claim 7 wherein a cloud network host is configured to receive a set of endpoints in a path and a health-checking endpoint.

12. A system including a processor and a non-transient computer readable medium containing instructions, the instructions when executed by the processor configured to perform the steps of:
maintaining a primary and backup route in a cloud network;
establishing a primary route from a customer edge to a virtual machine or cloud front end within the cloud network;
monitoring the primary route for a failure via a signal from a cloud router to a health check module;
providing route health information to the virtual machine or the cloud front end coupled to the health check module; and
upon detecting a failure with the primary route, automatically establishing or routing data from the customer edge to the virtual machine or cloud front end within the cloud network.

13. The system of claim 12 wherein:
the primary route and the backup route collectively form a route set; or
the primary route and the backup route collectively form a route set and information related to the route set is stored in a data plane.

14. The system of claim 12 wherein the primary route is deemed to fail upon packets within the network not meeting a service level objective.

15. The system of claim 12 wherein a cloud network host is configured to receive a set of endpoints in a path and a health-checking endpoint.
